# EUROPÄISCHE PATENTANMELDUNG

(11) **EP 1 018 371 A1**
(43) Veröffentlichungstag der Anmeldung: **12.07.2000**
(21) Anmeldenummer: 99630001.8
(22) Anmeldetag: 04.01.1999
(51) Int. Cl.: B03B 9/06

(54) **Verfahren und Vorrichtung zur Abfallaufbereitung mit Nachzerkleinerung von getrockneten und metallfreien Siebfraktionen**

(71) Anmelder: R.S.T. Luxembourg S.A., 1930 Luxemburg (LU)
(72) Erfinder: Schmidt, Hans, 38704 Liebenburg (DE)
(74) Vertreter: Weydert, Robert

(57) **Zusammenfassung**

Zur Erzielung hoher Trennschärfen bei der Separation von Stoffgruppen aus Abfällen wird vor der allgemein für solche Prozesse erforderlichen Nachzerkleinerung (10) im Anschluß an die Vorzerkleinerung (2) eine Fe-Metallabscheidung (3), eine Grobabsiebung(4), eine Trocknung (5), eine zweite Fe-Metallabscheidung (6), eine Feinabsiebung (7), eine NE-Metallabscheidung (8) und eine Schwerstoffabscheidung (9) angeordnet.

Dadurch wird erreicht, daß vor der Nachzerkleinerung (10) alle harten, den Zerkleinerungsvorgang störenden Stoffe, abgetrennt sind und schneidend nachzerkleinert werden können. Durch die schneidende Nachzerkleinerung ohne Schadstoffe und im trockenen Zustand wird die Eigenkontamination des nach dem Nachzerkleinerungsvorgang zu separierenden Stoffgemisches verhindert und eine hohe Trennschärfe bei der Separation erzielt.

## Beschreibung

Die vorliegende Erfindung betrifft ein Verfahren zur Abfallaufbereitung mit Nachzerkleinerung von getrockneten und metallfreien Siebfraktionen zur Erzielung hoher Trennschärfe von Stoffgruppen, sowie eine Vorrichtung zur DurchfUhrung des Verfahrens.

Um aus Abfällen verschiedene Stoffgruppen mit hoher Trennschärfe separieren zu können, bedarf es einer geeigneten Vorbereitung des zu trennenden Stoffgemisches. Dazu ist es erforderlich, das aufzutrennende Stoffgemisch in einheitliche Korngrößengruppen zu zerkleinern. Das wird Üblicherweise mit einer groben Vorzerkleinerung und nachfolgend mit einer sogenannten Nachzerkleinerung erreicht.

Verfahren dieser Art sind beispielsweise beschrieben in
DE-PS 31 05 597
EP-PS 02 43 747 B1
US-PS 4, 623, 515
US-PS 4, 815, 668

Die bekannten Verfahren sind mit dem Nachteil behaftet, daß die Nachzerkleinerung sowohl im ungetrockneten, also noch mehr oder weniger klebrigen Zustand der Abfälle, als auch noch zusammen mit Fe-Metallen und NE-Metallen erfolgt. Durch den noch klebrigen Zustand werden Stoffgruppen, die später separiert werden sollen, beim Nachzerkleinerungsvorgang miteinander kontaminiert. Dieser unerwünschte Effekt wird noch dadurch verstärkt, daß ohne Vorabscheidung aller Metalle nur eine Nachzerkleinerung mit robusten und aufwendigen Zerkleinerungsaggregaten mit Schlagwerken wie zum Beispiel einer HammermUhle u.ä. möglich ist, Im Ergebnis ist ein mit nur mäßiger Trennschärfe behafteter Separationsprozess der Stoffgruppen möglich.

Der Erfindung liegt die Aufgabe zugrunde, die beschriebenen Nachteile einer Nachzerkleinerung von ungetrockneten und mit Metallen behafteten Abfallsiebfraktionen zu vermeiden und den Nachzerkleinerungsprozeß zu vereinfachen.

Diese Aufgabe wird erfindungsgemäß dadurch gelöst, daß der Nachzerkleinerung die Verfahrensschritte Vorzerkleinerung, erste Fe-Metallabscheidung, Grobabsiebung, Trocknung, zweite Fe-Magnetabscheidung, Feinabsiebung, NE-Metallabscheidung, Schwerstoffabscheidung vorgeschaltet werden.

Die Erfindung wird an einem Ausführungsbeispiel durch die nachstehenden Ausführungen in Verbindung mit einer Fließschema-Zeichnung näher erläutert.

Um den erfindungsgemäßen Effekt zu erzielen, wird im Anschluß an die Vorzerkleinerung (2) in einer ersten Fe-Metallabscheidung (3) die Abtrennung von großen Eisenteilen (16) vorgenommen. Im Anschluß daran erfolgt eine Grobabsiebung (4) zur Abtrennung einer heizwertreichen Groborganik-Fraktion (14) mit einer Korngröße von größer 40 - 80mm.

Der Siebdurchgang kleiner 40 - 80mm durchläuft anschließend die Trocknung (5), dabei werden die Klebekräfte des Stoffgemisches weitgehend aufgehoben. Nach der Trocknung (5) erfolgt eine weitere Fe-Metallabscheidung (6) zur Abtrennung der restlichen feinen Fe-Metalle (16).

Danach werden in einer Feinabsiebung (7) die Fein- und Feinstfraktionen abgetrennt. Die Feinstfraktion (17) mit einer Korngröße kleiner 0,8 - 2mm wird beispielsweise direkt einer thermischen Verwertung als Fein-Brennstoff (21) zugeführt.

Die Feinfraktion ist aufgrund ihrer vorliegenden Struktur und Korngröße bereits mit hoher Trennschärfe in Stoffgruppen separierbar und wird den Trennstufen NE-Metallabscheidung (12) und Dichtetrennung (13) zugeführt. Die verbleibende Feinorganik (20) wird als Fein-Brennstoff (21) verwertet.

Die aus der Feinabsiebung (7) verbleibende Mittelfraktion im Körnungsbereich von ca. 10 bis ca. 80mm bildet aus aller Erfahrung mengenmäßig den Hauptanteil der Abfälle.

Die verbleibende Mittelfraktion wird nun einer NE-Metallabscheidung (8) zur Abtrennung aller NE-Metalle (18) sowie nachfolgend einer Schwerstoffabscheidung (9) beispielsweise durch Prallabscheider o.ä. zur Abtrennung der schweren und harten Mineralien (19) wie Glas, Keramik, Steine.

Die nun von allen harten Materialteilen befreite und trockene Hauptfraktion wird zur Ermöglichung einer weiteren trennscharfen Stoffgruppenseparation, insbesondere der Separation mittels Dichtetrennung (11) von organischen und anorganischen Stoffen (Mineralien), auf ein einheitliches Körnungsspektrum von kleiner ca.10mm nachzerkleinert. (10).

Dieser Vorgang ist aufgrund der vorausgegangenen Abscheidungen aller Hartstoffe mit einem schneidenden Aggregat und somit äußerst wirtschaftlich möglich.

Die mit der Erfindung erzielten Vorteile bestehen insbesondere darin, die von Grob-Organik und Feinmaterial befreite Hauptfraktion der Abfälle im Körnungsbereich von 10 - 80mm ohne Eigenkontamination von Schadstoffen wie z.B. NE-Metalle u.a. mit Organikmaterial und ohne alle Metalle statt mit einer schlagenden, mit einer wesentlich wirtschaftlicheren und materialschonenden schneidenden Nachzerkleinerung auf eine hochtrennfähige Körnung von kleiner ca.10mm aufbereiten zu können.

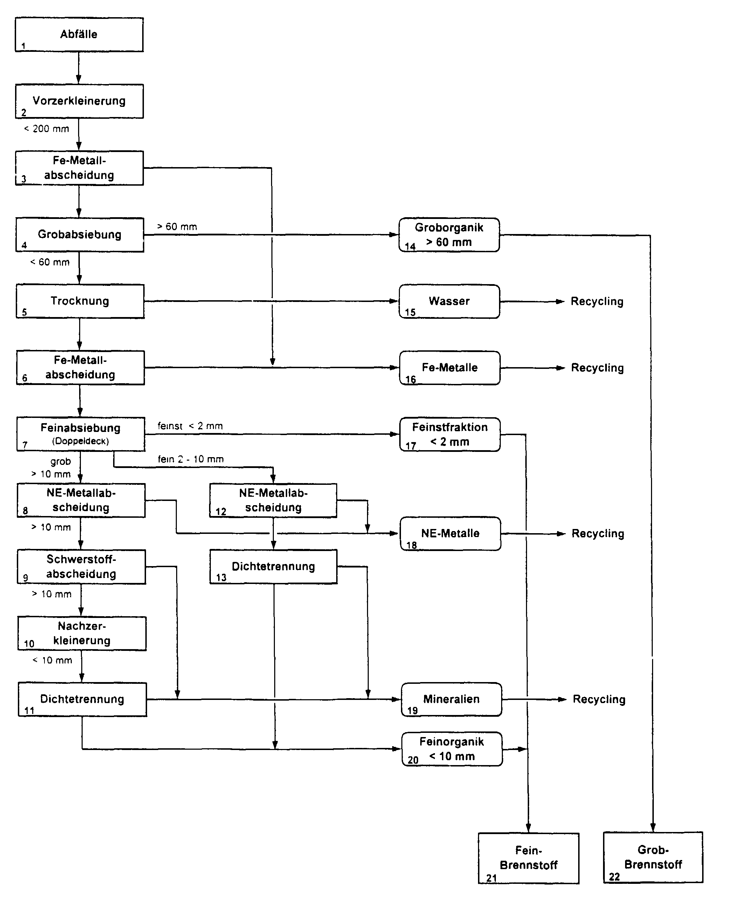

## Patentansprüche

1. Verfahren zur Abfallaufbereitung mit Nachzerkleinerung von getrockneten und metallfreien Siebfraktionen zur Erzielung hoher Trennschärfe von Stoffgruppen, dadurch gekennzeichnet, daß das im Anschluß an eine Vorzerkleinerung, eine Eisenmetallabscheidung, eine Siebung, eine Trocknung und eine Nichteisenmetallabscheidung anfallende Material einer Nachzerkleinerung unterworfen wird, so daß einheitliche Korngrößengruppen entstehen, welche eine nachfolgende Stoffgruppenseparation mit hoher Trennschärfe ermöglichen.

2. Verfahren nach Anspruch 1, dadurch gekennzeichnet, daß durch Abtrennung aller Eisen- und Nichteisenmetalle vor der Nachzerkleinerung, die Nachzerkleinerung des verbleibenden Materials schneidend erfolgt.

3. Verfahren nach Anspruch 1 und 2, dadurch gekennzeichet, daß durch Trocknung des Materials vor der Nachzerkleinerung, eine Massenreduzierung des verbleibenden nachzuzerkleinernden Materials von Üblicherweise ca. 30 % erreicht wird.

4. Vorrichtung zur Durchführung des Verfahrens nach Ansprüchen 1 bis 3, dadurch gekennzeichnet, daß als Nachzerkleinerungsmaschine ein Aggregat mit integriertem Siebboden zur Erzielung der gewünschten maximalen Korngröße zur Anwendung kommt und damit eine zusätzliche Siebmaschine inclusive Rezirkulationseinrichtung entfällt.
